# EUROPEAN PATENT SPECIFICATION

(11) **EP 1 520 634 B1**
(45) Date of publication and mention of the grant of the patent: **04.01.2012**
(21) Application number: 04023185.4
(22) Date of filing: 29.09.2004
(51) Int. Cl.: B09B 1/00

(54) **Process for the activation of landfills of bio-dried waste**
Verfahren zur Aktivierung von Deponien von biologisch getrocknetem Abfall
Procédé pour activer une décharge de déchets séchés biologiquement

(30) Priority: 03.10.2003 IT MI20031903
(43) Date of publication of application: 06.04.2005
(73) Proprietor: ECODECO S.r.l., 20122 Milano (IT)
(72) Inventor: Natta, Giuseppe, 27010 Giussago (PV) (IT); Donati, Gianni, 27010 Giussago (PV) (IT); Natta, Francesco, 27010 Giussago (PV) (IT)
(74) Representative: Minoja, Fabrizio

(56) References cited:
- EP-A- 0 623 399
- EP-A- 0 706 839
- WO-A-92/18261

## Description

### Field of application

The present invention relates to the area of landfills for municipal solid waste (MSW), also after selective collection or fractions obtained or derived from the same.

More particularly the present invention relates to landfills obtained by accumulating material derived from MSW, previously bio-dried and compressed into bales (BIOCUBES), known not to emit biogas and percolate.

The present invention discloses a process for activating said landfills of bio-dried material for the purpose of energy exploitation of the degradable fraction contained in said bio-dried material by intensive wetting and anaerobic digestion with the production of biogas.

The applications relate to landfills of bio-dried material already in existence and new landfills with various constructional layouts and systems of feeding and removing the liquids and gases produced.

### State of the art

Municipal solid waste (MSW) from selective collection, after having been compacted, is generally dumped in controlled landfills with previously waterproofed bases according to the prior art (conventional landfill).

It normally comprises an easily digestible fraction composed of wet organic residues, an inorganic non-combustible fraction composed of glass, debris from demolitions and metals, and a combustible fraction comprising material from packaging, material of a plastic nature, wood, board and paper as indicated in the Table.

**Table: Typical composition of USW after selective collection**

| | Composition | Humidity | Ash | Oxidable fraction | Carbon | Renewable fraction | Low heat value |
|---|---|---|---|---|---|---|---|
| | % | % | % | % | % | % | Kcal kg⁻¹ |
| Paper and cellulose products | 27 | 9.5 | 1.6 | 15.9 | 9.6 | 27 | 2387 |
| Wood | 6 | 1.8 | 0.1 | 4.1 | 2.4 | 6 | 2949 |
| Plastic | 18 | 1.1 | 1.6 | 15.3 | 11.8 | 0 | 6764 |
| Glass and inert material | 4 | 0.1 | 3.9 | 0 | 0 | 0 | -15 |
| Metals | 4 | 0.2 | 3.8 | 0 | 0 | 0 | -30 |
| Organic | 29 | 20.3 | 4.4 | 4.4 | 3.8 | 29 | 272 |
| Screened waste | 12 | 3.6 | 5.4 | 3 | 1.3 | 7.2 | 921 |
| **TOTAL** | **100** | **36.5** | **20.8** | **42.7** | **28.9** | **69.2** | **2226** |

The growing production of waste and the consequent need for further spaces for controlled landfills have led to the development of processes of disposal as alternatives to dumping in conventional landfills.

It should also be noted that these landfills have considerable environmental problems and problems of social acceptability both during their start-up, during cultivation and territorial recovery at end of life.

The life of a landfill is around 20 years during which biogas is produced at around 150 Nm³/t and correspondingly the organic material is almost totally degraded with the exception of plastic.

In the USA, where the availability of land does not pose a problem but where the production of waste is showing a strong increase, research is underway to improve the performances of MSW landfills.

In this respect mention is made here of the Outer Loop Landfill project (Louisville, KY), presented at the US EPA Workshop conference on bioreactor landfills, 27-28 February 2003, Arlington, VA, which includes quantitative studies on the performances of both anaerobic and combined aerobic/anaerobic landfills with accelerated digestion through recycling of the percolate.

Patent application US 2003/0108394 claims the conversion of conventional landfills in aerobic conditions to accelerate the process of conversion of the biodegradable waste portion.

Patents US 6599058, US 6591695, US 2003/0114988 disclose processes for improved measurement of the effluent and the emissions of landfills and characterisation of the performances and methods of management thereof.

Contrarily the European Community (1999/31/EC) lays down a 50% reduction in MSW dumped by 2009 and the development of alternative recovery methods.

A common feature of these alternative processes is the recovery and recycling of at least a fraction of the waste. This fraction can be recovered by obtaining energy from the combustion of waste.

The option preferred to date has been the combustion of MSW with production of electrical energy and dumping of the ash, but this option too poses environmental problems and those of acceptability by the public and above all does not eliminate totally the dumping of the MSW due to the discontinuity of the combustors and the non-uniformity of the material and of the supplies.

For this reason processes have been developed for the transformation of malodorous and heterogeneous waste with high environmental impact into inert, homogeneous materials which are easier to handle and store, in this way providing a definitive solution to the problem of waste and offering various options for the use of derived materials with an increase in the flexibility of the entire cycle of the waste itself.

The application of these new materials in incinerators represents one of the possible options and other uses are possible such as the integration of conventional fuel in cement works or coal power plants, and the actual dumping and environmental recovery of conventional landfills at end of life.

Methods are known for the preparation of bio-dried materials by means of the heat generated by the aerobic digestion of the digestible fraction present in the waste itself.

In the European patent EP-A-706839, in the name of the same Applicant, a description is given of a process for the recovery of energy from municipal solid waste by the preparation of non-conventional fuel comprising the phases of rough shredding of the waste, accumulation of the same on a porous bed in a digestion chamber, forced aerobic digestion with temperatures up to 65-70°C until the waste is dried, performed by means of a flow of aspirated air through the waste itself, and removal of odours from the output air by means of bio-filters.

The product bio-dried in this way can be refined by screening, removal of the metals and grinding of the remaining fraction until a maximum final diameter is obtained which is smaller than a centimetre.

The Italian patent IT-A-1283805 describes a process for the recovery of energy from municipal solid waste comprising a phase of initial shredding to homogenise and limit the formation of local pockets of anaerobic digestion and a phase of forced digestion until the waste is dried. The flow of air removes water and the digestion stops when the remaining water is not sufficient for supporting it. Water is not added during the process. Inert materials, metals, glass and demolition debris are removed from the digested and dry waste, ground to 3 cm. The residue obtained is sent directly for combustion or loaded into containers for its transport by road.

Patent application BS 2002 A 000055 (corresponding to EP-A-1386675) describes in detail the plant for the bio-drying of waste and the automatic control system for management of the aerobic digestion process.

The bio-dried material which is not yet refined is more homogeneous and has a higher heat value (3100 kcal/kg) than the MSW, has lost approximately 25% in weight mainly in the form of evaporated water and can be usefully adopted in the same grid incinerators in which the actual MSW is burnt.

While awaiting availability of incineration plants capable of meeting the increasingly growing production of MSW, the latter can be usefully stored in a landfill from where it can if necessary be recovered later.

Patent application VI 2002 A000196 (corresponding to EP-A-1398088) by the same Applicant discloses a method for reclaiming, by the use of bio-dried material compressed into bales (BIOCUBES), conventional landfills at end of life with environmental benefits and territorial recovery of the landfill.

Numerous landfills have also been constructed composed solely of BIOCUBES which have demonstrated negligible environmental impact not only during their construction but also during the first years' service.

The landfill is in fact covered with a layer of clay and not with an impermeable sheet which allows rapid rooting of vegetation.

The bio-dried BIOCUBES do not emit odours and biogas and do not produce percolate.

Rain is absorbed by the covering clay, evaporates and is absorbed by the vegetation and, even in the case of heavy rainfall, its penetration is limited to a few centimetres of bio-dried material.

The material has in fact water absorbency up to 50-60% of its weight.

The only disadvantage of this method is the immobilisation, moreover currently necessary without incineration capacity, of a considerable quantity of energy.

WO 92/18261 A discloses a combustible gas production/collection method from non-toxic waste.
EP-A-0623399 describes a process for the disposal of municipal solid waste prepared into bales.

### Description of the invention

The general object of the present invention is that of eliminating the disadvantage described above, making available a process which allows partial energy exploitation of the landfill of bio-dried material by the production of methane even before availability of incineration capacity.

A special object is that of providing a process which allows this exploitation to be implemented on part or all of the landfill when the need arises.

A further object is that of providing a process for the intensive production of methane and therefore such as to justify investments in the energy production systems.

These objects and others which will be explained in greater detail herein below are achieved by the process according to independent claim 1.

Advantageous embodiments of the invention are disclosed by the dependent claims.

It has in fact been found, surprisingly, that, by wetting the BIOCUBES, they are able to retain up to 56% of water and that following wetting, even limited, an intensive production of biogas occurs, considerably higher than that present in piles and landfills of MSW.

The BIOCUBES behave as if the intensive treatment of bio-drying performed in the process and in the plant such as that described in EP-A-706839 and EP-A-1386675 has made available the biodegradable part of the material whereof the MSW is composed for rapid activation of the anaerobic digestion for the production of biogas.

The process of the present invention can be exploited industrially on existing landfills composed of BIOCUBES and the layout of newly built landfills can be modified.

A control was therefore performed directly on a landfill situated near a plant for production of 120,000 t/a of BIOCUBES, shown in the accompanying drawings, wherein:
- Fig. 1 is a plan view of the landfill;
- Fig. 2 is a vertical section view of the landfill of Fig. 1 taken at the area denoted by A;
- Figs. 2A and 2B are horizontal sections taken along lines A-A and B-B respectively in Fig. 2.

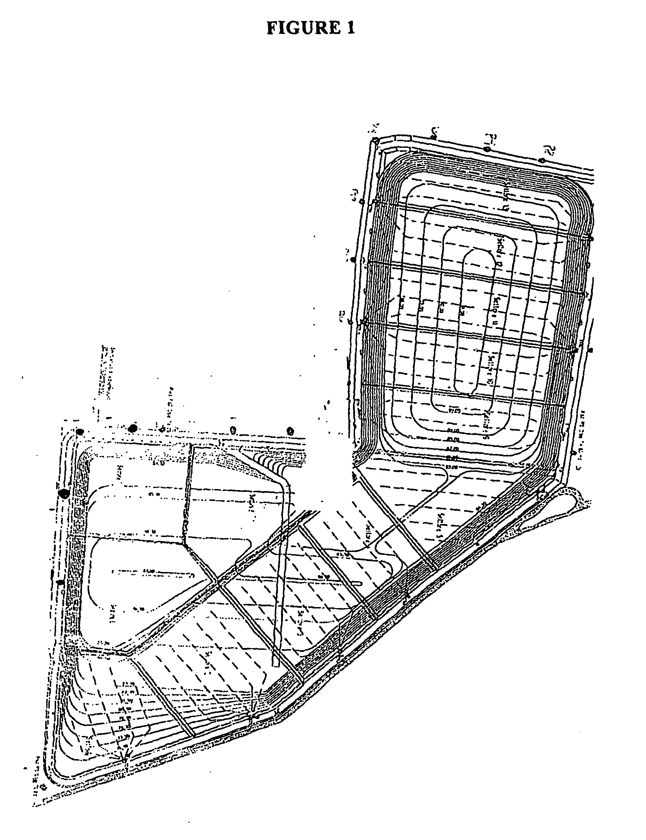

Referring to Fig. 1, the BIOCUBES allocated area is the hill shown in a plan view with the level lines, denoted by A and divided into 5 sectors from 9 to 13.

Each sector measures approximately 50 m in width, 200 m in length and 10 m in depth and comprises 100,000 m³ of BIOCUBES, equal to approximately 70,000 t.

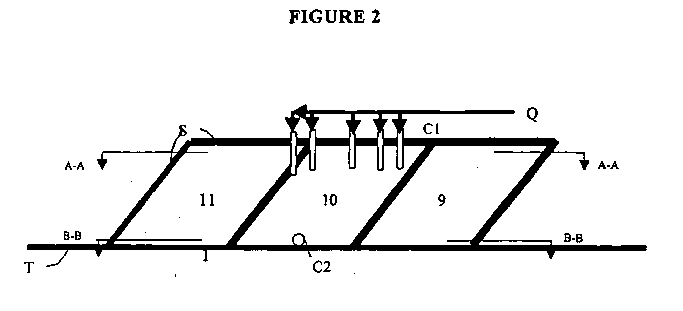

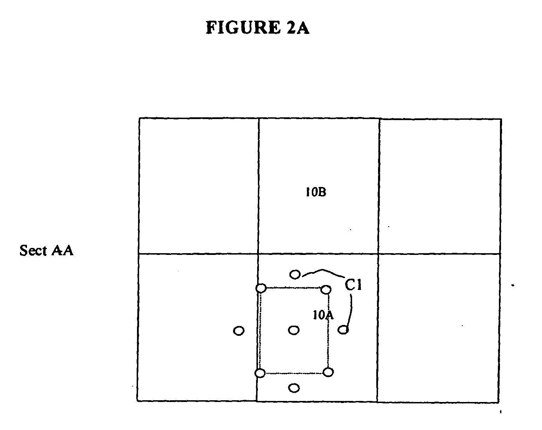

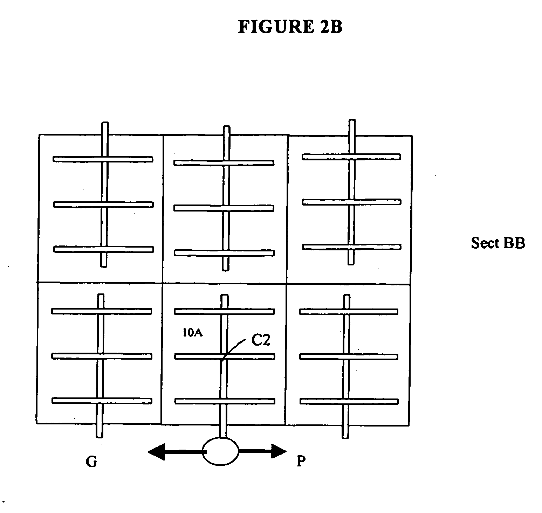

Referring to the diagram of Fig. 2 the landfill A rests on an impermeable sheet T and each sector 9, 10, 11 has sloping walls covered with a layer of clay S approximately 1 m thick.

Each sector is equipped, near the sheet, with a system C2 for drainage of the percolate P which can also be used for aspirating biogas G.

In normal service conditions the landfill of BIOCUBES has virtually zero percolate and does not have a significant production of biogas.

However the system of aspiration of the biogas is activated from time to time as the landfill acts like an enormous storage tank and is saturated in time by even minimal quantities of biogas produced due to the accidental presence of pockets of humidity due to rain during its construction and prior to covering with clay.

Referring to sector 10 and in particular to the portion 10A of this sector which has an independent system for collecting percolate and biogas, the landfill can be equipped with a series of pipes C1 which traverse the layer of clay S and distribute over the landfill a quantity Q of water in order to wet the BIOCUBES.

This type of operation can be advantageously performed for a landfill which is already completed.

For a newly designed and constructed landfill, the distributor of the water C1 can be constructed in a similar manner to the collector manifold C2 and set up under the impermeable layer of clay.

Similarly, and above all in the case wherein large quantities of water Q are fed and, despite the high absorbent capacity of the BIOCUBES, there is significant production of percolate P, it is possible to build independent conduits C2 for collecting the percolate P and the biogas G, the first arranged near the sheet T of the landfill and the second immediately above to perform aspiration of the biogas G.

Similarly, according to the prior art for conventional landfills, the percolate G can be sent to a reactor for treatment and denitrification in order to be recycled for wetting of the landfill with the quantity Q.

The biogas G can be used in a combustion plant for the production of heat and/or electrical energy.

For example it can be used to integrate the fuels of thermoelectric power plants or to raise the heat content of the steam in waste incineration plants in place of conventional fuels.

Advantageously it can be used in internal combustion engines, possibly mobile among the various landfills and equipped with an alternator for the production of electrical energy which can be used on the site or is to be fed into the distribution network.

The results obtained with the process of the present invention are given in the following examples of application performed using the landfill represented in Fig. 1 and in particular activating sector 10A of this landfill solely for demonstration purposes.

### EXAMPLE 1

Referring to Fig. 2, in the pipes C1, installed on sector 10A according to the layout shown in section A-A, 80 m³ of well water are fed during approximately one day.

The water fed represents a very reduced quantity compared to the 50,000 m³ of BIOCUBES or approximately 35,000 t of which sector 10A is formed.

Given the absorbent power of the material stored, it can be assumed that the operation has concerned a mass of material of around 400-500 m³ or 300-400 t.

Sector 10A was left to rest for approximately one week, without noting any increase in the percolate and only a slight excess pressure on the collector manifold C2.

Gas aspiration was started and the methane content analysed for approximately 15 days, measuring a constant net production of approximately 7 Nm³/h.

If it were to remain constant and with the hypotheses made, this production would correspond to approximately 0.025 - 0.018 Nm³·h⁻¹·t⁻¹, that is to say it would be such as to guarantee in 8-12 months the production of a conventional MSW landfill which, as mentioned, is around 150 Nm³/t in 20 years and which corresponds to the transformation into biogas of most of the degradable portion of the waste.

For a better understanding of this unexpected and surprising result which foresees the possibility of intensive energy exploitation of the BIOCUBES landfill a battery of tests were started on sector 10A which are still underway.

### EXAMPLE 2

A flow of 4-5 m³/h was distributed over the pipes C1 for 30 days for a total of approximately 3000 m³ and equal to 5% of the volume of the landfill.

An increase in the quantity of percolate produced was not noted and it was therefore retained in full by the layer of BIOCUBES.

Contrarily the methane produced rose from the 7 Nm³/h of the previous example to 60 Nm³/h after one month, a value which remained virtually constant in the last week.

Also conservatively assuming that the phenomenon involved the whole mass of 35,000 t stored in sector 10A, this production would suggest possible energy exploitation of the biodegradable material present in the landfill in 10 years.

Since the biodegradable material composed of screened waste, paper and wood (Table) represents approximately 50% of the energy contained in the MSW in the BIOCUBES, the possibility is foreseen of energy and economic exploitation of the technology of the BIOCUBES landfill together with incineration.

In fact the investment in a combustion engine equipped with an alternator is minimal if compared with that of an incinerator and the thermoelectric yields is higher.

If we add that the non-biodegradable combustible material can be recovered from the exhausted landfill and consider the possibility of a more stringent selection of the plastic not only through selective collection but also downstream of the bio-drying process, the BIOCUBES landfill can become not only a stable carbon sink, as it is currently, but also a potential source able to supply for use most of the energy contained in the MSW and which can be activated as required.

## Claims

1. Process of activation of a landfill of municipal solid waste (MSW) dried by means of an aerobic digestion to a humidity content lower than 20% by weight, placed on an impermeable containing sheet (T) and covered at the top with a layer of clay with low permeability to gases and to liquids, **characterised by** the step of feeding of water into the landfill until humidity contents of around 30-60% by weight are reached to trigger a process of anaerobic digestion with production of biogas comprising 40-50% methane.

2. Process according to claim 1, wherein said MSW dried by means of an aerobic digestion process is compressed into bales.

3. Process according to claim 1 or 2, **characterised by** the further step of recycling the landfill percolate, after possible treatment of the same, for use in addition to or in place of the water for activation of the MSW or compressed bales.

4. Process according to any one of the previous claims, **characterised in that** said biogas produced by the activation of the MSW is used in a combustion plant for the production of heat and/or electrical energy.

5. Process according to any one of claims 1 to 3, **characterised in that** said biogas is used in internal combustion engines equipped with an alternator for the production of electrical energy.

## Patentansprüche

1. Verfahren zur Aktivierung einer Deponie fester Siedlungsabfälle (municipal solid waste, MSW), welche durch aeroben Abbau bis zu einem Feuchtigkeitsgehalt von niedriger als 20 Gew.-% getrocknet, auf eine undurchlässige Sperrfolie (T) gelegt und oben mit einer Schicht aus Lehm mit niedriger Durchlässigkeit für Gase und Flüssigkeiten bedeckt werden, **gekennzeichnet durch** den Schritt der Wasserzuführung in die Deponie bis ein Feuchtigkeitsgehalt von etwa 30-60 Gew.-% erreicht wird, um einen Prozess anaeroben Abbaus mit der Verstellung von Biogas, welches 40-50% Methan umfasst, auszulösen.

2. Verfahren gemäß Anspruch 1, wobei die MSW, welche durch einen aeroben Abbauprozess getrocknet werden, in Ballen zusammengepresst werden.

3. Verfahren gemäß Anspruch 1 oder 2, **gekennzeichnet durch** den weiteren Schritt der Wiederverwendung des Deponieperkolats, nach seiner möglichen Behandlung, zur Verwendung zusätzlich zum oder anstelle des Wassers für die Aktivierung der MSW oder zusammengepressten Ballen.

4. Verfahren gemäß einem der vorherigen Ansprüche, **dadurch gekennzeichnet, dass** das Biogas, welches durch die Aktivierung der MSW hergestellt wird, in einer Feuerungsanlage zur Erzeugung von Wärme und/oder elektrischer Energie verwendet wird.

5. Verfahren gemäß einem der Ansprüche 1 bis 3, **dadurch gekennzeichnet, dass** das Biogas in einem Verbrennungsmotor, welcher mit einem Generator zur Gewinnung elektrischer Energie versehen ist, verwendet wird.

## Revendications

1. Procédé d'activation d'une décharge de déchets solides municipaux (DSM) séchés au moyen d'une digestion aérobie jusqu'à une teneur en humidité inférieure à 20% en poids, placés sur une couche imperméable (T) et recouverts par une couche d'argile peu perméable aux gaz et aux liquides, **caractérisé par** l'étape d'alimentation en eau dans la décharge jusqu'à ce qu'une teneur en humidité d'environ 30-60% en poids soit atteinte pour déclencher un procédé de digestion anaérobie avec une production de biogaz comprenant 40-50% de méthane.

2. Procédé selon la revendication 1, dans lequel les DSM séchés au moyen d'un procédé de digestion aérobie sont compressés dans des balles.

3. Procédé selon la revendication 1 ou 2, **caractérisé par** l'étape additionnelle de recyclage du percolat de la décharge, après un éventuel traitement de celui-ci, pour une utilisation en plus, ou à la place, de l'eau pour l'activation des DSM ou des ballots compressés.

4. Procédé selon l'une quelconque des revendications précédentes, **caractérisé en ce que** ledit biogaz produit par l'activation des DSM est utilisé dans une installation de combustion pour la production de chaleur et/ou d'énergie électrique.

5. Procédé selon l'une quelconque des revendications 1 à 3, **caractérisé en ce que** ledit biogaz est utilisé dans des moteurs à combustion interne équipés d'un alternateur pour la production d'énergie électrique.
